Europäisches Patentamt

European Patent Office

Office européen des brevets

(11) Veröffentlichungsnummer: **0 351 577 B1**

## (12) EUROPÄISCHE PATENTSCHRIFT

(45) Veröffentlichungstag der Patentschrift: **30.12.92**

(21) Anmeldenummer: **89111423.3**

(22) Anmeldetag: **23.06.89**

(51) Int. Cl.⁵: **B64C 27/33**, B64C 27/48, B64C 27/51

---

(54) **Rotor, insbesondere eines Drehflügelflugzeuges.**

---

(30) Priorität: **21.07.88 DE 3824815**

(43) Veröffentlichungstag der Anmeldung:
**24.01.90 Patentblatt 90/04**

(45) Bekanntmachung des Hinweises auf die
Patenterteilung:
**30.12.92 Patentblatt 92/53**

(84) Benannte Vertragsstaaten:
**DE FR GB IT**

(56) Entgegenhaltungen:
**EP-A- 0 097 885**
**DE-C- 3 534 968**
**US-A- 4 541 777**

(73) Patentinhaber: **Eurocopter Deutschland Gesellschaft mit beschränkter Haftung
Postfach 80 11 40
W-8000 München 80(DE)**

(72) Erfinder: **Wagner, Alois
Haus Nr. 3
W-8157 Emmerkofen(DE)**
Erfinder: **Friedberger, Otmar
Hauptstrasse 23
W-8014 Neubiberg(DE)**

(74) Vertreter: **Frick, Gerhard, Dipl.-Ing.
Deutsche Aerospace AG Patentabteilung
Postfach 80 11 09
W-8000 München 80(DE)**

---

EP 0 351 577 B1

## Beschreibung

Die Erfindung betrifft einen Rotor gemäß dem Oberbegriff des Patentanspruchs 1.

Bei einem derartigen durch die DE-PS 32 41 754 bzw. DE-PS 35 34 968 bekannten Rotor wird die erforderliche Beweglichkeit der Blattsteuerhülle gegenüber der Blattwurzel bzw. Rotornabe durch eine Gelenklagerung der Strebe sichergestellt. Je nach Ausgestaltung bedingt diese Gelenklagerung einen relativ hohen Wartungsaufwand, erfahrungsgemäß insbesondere bei der Verwendung eines z.B. gegenüber einem Elastomerlager relativ verschleißbehafteten Metallgelenkes. Dagegen hat die Gelenklagerung im Falle eines Elastomerlagers einen beträchtlichen Anteil am Gewicht der Hüllenabstützung, vor allem wenn das Elastomerlager für eine lange Lebensdauer auszulegen Ist. Dann kann die Gelenklagerung ein wesentlich größeres Gewicht aufweisen als mit einem Metallgelenk.

Der Erfindung liegt daher die Aufgabe zugrunde, bei einem Rotor der eingangs genannten Art auf eine gesonderte Gelenklagerung der blattwurzel- bzw. rotornabenseitigen Abstützung der Blattsteuerhülle ganz zu verzichten.

Diese Aufgabe ist für einen gattungsgemäßen Rotor mit den kennzeichnenden Merkmalen des Patentanspruchs 1 gelöst. Hiernach ist die jeweilige Strebe von einer solchen Ausgestaltung und Anordnung, daß sie nicht nur durch entsprechende Steifigkeit in Blattschlag-, Blattschwenk- sowie Blattlängsrichtung bzw. Blattfliehkraftwirkungsrichtung die erforderliche Stützfunktion für die Blattsteuerhülle zu erfüllen vermag, sondern auch zugleich als ein Torsionslager derselben wirksam ist, d.h. Drehwinkelbewegungen der Blattsteuerhülle gegenüber der Blattwurzel bzw. Rotornabe ermöglicht. Hierbei wirkt der Profilsteg als ein durch die Blattsteuerhülle schwenkbarer Hebelarm, welcher bei der Blattwinkelverstellung den Profilfuß zwischen seinen beiden blattwurzel- bzw. rotornabenfesten Enden tordiert. Diese Wirkung läßt sich durch die im Anspruch 2 gekennzeichnete Gestaltung des T-Profils noch steigern.

Zudem hat die Strebe gemäß der Erfindung den beträchtlichen Vorteil, daß mit der im Anspruch 3 gekennzeichneten Konfiguration ihre Steifigkeit in Blattschlag- und Blattschwenkrichtung durch entsprechende Wahl des Winkels zwischen den Profilschenkeln (Platten) verschieden einstellbar ist. Diese Einstellung bei der Auslegung der Strebe wird man je nach Belastung der Blattsteuerhülle (durch die Blatteinstellwinkelsteuerung) vornehmen, beispielsweise ist die Forderung nach großer Steifigkeit der Strebe in Blattschlagrichtung durch einen relativ kleinen Schenkelwinkel erfüllbar.

Schließlich ist die Erfindung durch die in den Ansprüchen 4 bis 6 gekennzeichneten Ausgestaltungen mit relativ geringem baulichen Aufwand insbesondere bei Strukturen aus faserverstärktem Kunststoff von Vorteil.

Nachfolgend wird die Erfindung anhand eines Ausführungsbeispiels mit Bezug auf die Zeichnung erläutert. Hierin zeigen die

Fig. 1 und 2    jeweils in perspektivischer Ansicht einen Rotorblattanschluß eines Drehflügelflugzeugs,

Fig. 3    einen Längsschnitt durch einen Abschnitt der Anordnung gemäß Fig. 1 oder 2 am rotornabenseitigen Ende eines Blattsteuermittels,

Fig. 4    einen Schnitt gemäß Schnittlinie IV-IV der Fig. 3.

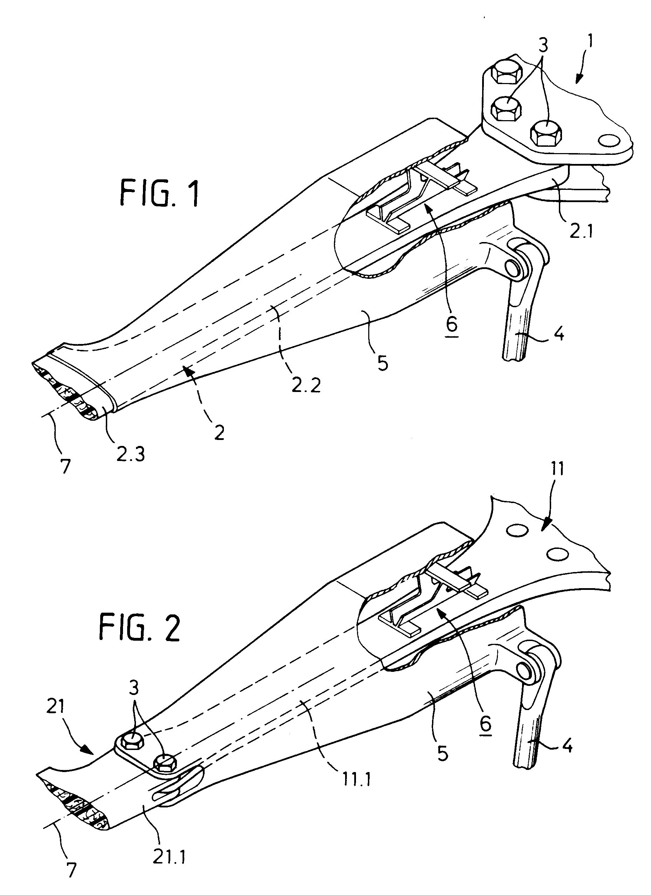

Gemäß Fig. 1 und 2 ist jeweils bei einer Rotornabe 1 bzw. 11 der Anschluß des einzelnen z.B. aus faserverstärktem Kunststoff aufgebauten Rotorblattes 2 bzw. 21 mittels dessen Blattwurzel 2.1 bzw. 21.1 in Dickenrichtung durchquerender Bolzen 3 hergestellt. Um bei einem solchen sog. starren Blattanschluß sicherzustellen, daß dennoch das Rotorblatt 2 bzw. 21 Blatteinstellwinkelbewegungen sowie Blattschlag- und Blattschwenkbewegungen ausführen kann, ist gemäß Fig. 1 ein zwischen der Blattwurzel 2.1 und einem Blattflügel 2.3 sich erstreckender Blatthals 2.2 nicht nur torsionsweich, sondern auch schlag- und schwenkbiegeelastisch ausgebildet. Dies wird durch die dargestellte relativ langgestreckte und flache Ausführungsform des Blatthalses z.B. aus Fasersträngen mit vorwiegend unidirektionaler Faserorientierung in Blattlängsrichtung erreicht. Alternativ ist gemäß Fig. 2 eine derartige Ausführungsform bei der Rotornabe 11 (beispielsweise aus faserverstärktem Kunststoff) für den einzelnen Rotornabenarm 11.1 vorgesehen, gegenüber welchem das "einfache" Rotorblatt 21 relativ biege- und torsionssteif ist.

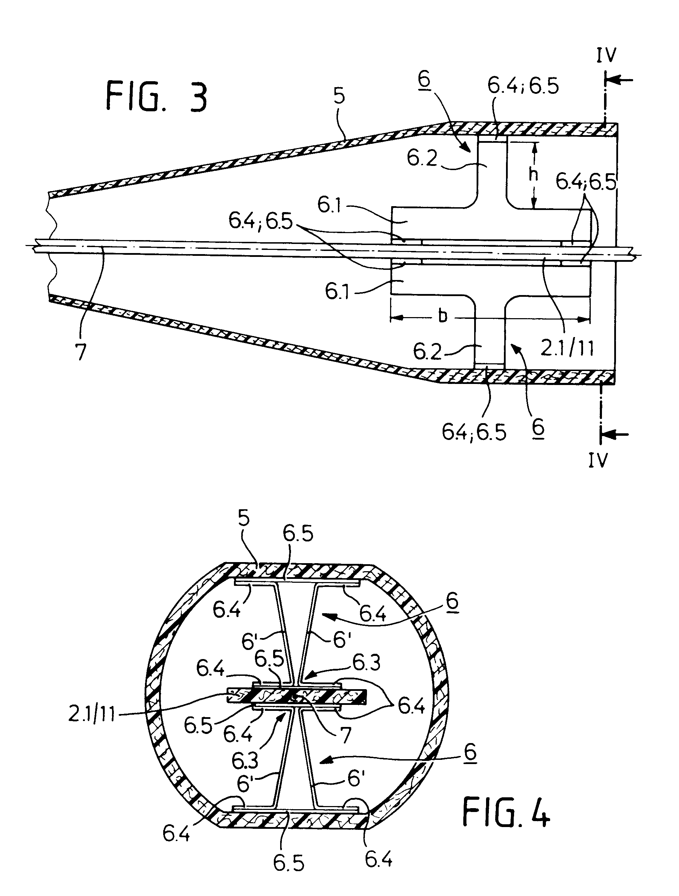

In beiden Fällen (Fig. 1 und 2) ist das Mittel zur Blatteinstellwinkelverstellung mit einer Steuerstange 4 eine durch die eingangs genannten DE-PSen bekannte Blattsteuerhülle 5, welche sich in koaxialer Anordnung dem Blatthals 2.2 (Fig. 1) bzw. Rotornabenarm 11.1 (Fig. 2) entlang bis zum Blattflügel 2.3 (Fig. 1) bzw. zur Blattwurzel 21.1 (Fig. 2) erstreckt. Diese Blattsteuerhülle 5 muß an der steifen Blattwurzel 2.1 (Fig. 1) bzw. Rotornabe 11 oder einem (wie eine Blattwurzel) weitgehend steifen Abschnitt des zugeordneten Rotornabenarmes 11.1 drehwinkelbeweglich abgestützt werden. Hierzu ist jeweils beidseitig der Blattwurzel 2.1 bzw. Rotornabe 11 je eine Strebe 6 vorgesehen, welche außer der Stützfunktion auch noch die Funktion eines Torsionslagers der Blattsteuerhülle 5 hat. Zur Erfüllung dieser Doppelfunktion weist gemäß Fig. 3 die einzelne Strebe 6 in Längsrichtung der Blattsteuerhülle 5 ein T-Profil auf mit einem torsionselastischen und in der Breite b größeren Profilfuß 6.1 als die Höhe h des Profilstegs 6.2, welcher hiergegen relativ steif ist. Dabei ist der Blattsteuerhülle 5 der Profilsteg 6.2 und der Blattwurzel 2.1 (Fig. 1) bzw. Rotornabe 11 (Fig. 2) der Profilfuß 6.1 zugeordnet. Schließlich ist eine Verbindung der Blattwurzel 2.1 bzw. Rotornabe 11 mit diesem in Längsrichtung der Blattsteuerhülle 5 sich erstreckenden Profilfuß 6.1 nur an seinen beiden Enden hergestellt, zwischen denen er sich also, wie insbesondere Fig. 3 zeigt, berührungsfrei erstreckt. Dem zufolge kann der Profilfuß 6.1 tordieren, sobald der Profilsteg 6.2 durch Blatteinstellwinkelbewegungen der Blattsteuerhülle 5 geschwenkt wird.

Wie Fig. 4 verdeutlicht, besteht die einzelne Strebe 6 vorzugsweise aus zwei torsions- und biegeelastischen Platten 6', welche in Blattiefenrichtung zu einem bezüglich der Blattschlagebene symmetrischen V-Profil mit einem solchen Abtand der Profilschenkel an der der Blattwurzel 2.1 bzw. Rotornabe 11 zugeordneten Profilwurzel 6.3 zusammengesetzt sind, daß sich die Achsen der Profilschenkel in der Blattwinkel- bzw. Blattlängsachse 7 schneiden. Diese Konfiguration hat den bereits erwähnten Vorteil, daß über den Winkel zwischen den beiden Platten 6' die Steifigkeit der einzelnen Strebe 6 je nach Bedarf einstellbar ist.

Durch die gewählte Plattenform ist schließlich auch noch ein einfacher und für eine Ausführung aus faserverstärktem Kunststoff besonders geeigneter Strebenaufbau sichergestellt, welcher beispielsweise durch bloßes Kleben mit der Blattwurzel 2.1 bzw. Rotornabe 11 und der Blattsteuerhülle 5 vereinigt werden kann. Hierzu bedarf es lediglich der aus Fig. 4 des weiteren ersichtlichen Vorkehrungen, wonach die beiden jeweils gepaarten Blattfeder-Platten 6' über an den drei Enden ihres T-Profils (Fig. 3) abgewinkelte Anschlußlaschen 6.4 mittels einer diese (je Paarung) vereinigenden Verbindungslasche 6.5 zur Strebe 6 zusammengefaßt sind. Die Strebe 6 kann somit ein als einstückige Einheit vorgefertigtes Bauteil sein. In der bevorzugten Ausführung aus faserverstärktem Kunststoff ist die Strebe 6 wartungsfrei und kann praktisch für unbegrenzte Lebensdauer ausgelegt werden.

**Patentansprüche**

1. Rotor, insbesondere für ein Drehflügelflugzeug, bei dem die Einstellwinkelbeweglichkeit des einzelnen Rotorblattes gegenüber einer Rotornabe entweder durch einen torsionselastischen Blatthals zwischen einer Blattwurzel und einem Blattflügel oder durch einen Blattanschluß an einem torsionselastischen Rotornabenarm sichergestellt ist und die Blatteinstellwinkelsteuerung mittels einer Steuerstange über eine in koaxialer Anordnung dem Blatthals bzw. Rotornabenarm entlang bis zum Blattflügel bzw. zur Blattwurzel sich berührungsfrei erstreckende, torsionssteife Blattsteuerhülle erfolgt, welche blattwurzel- bzw. rotornabenseitig mittels wenigstens einer Strebe abgestützt ist, **dadurch gekennzeichnet**, daß die Strebe (6) ein T-Profil aufweist, dessen Profilsteg (6.2) der Blattsteuerhülle (5) zugeordnet ist und dessen Profilfuß (6.1) sich in Längsrichtung der Blattsteuerhülle (5) erstreckt und torsionselastisch und der Blattwurzel (2.1) bzw. Rotornabe (11) zugeordnet ist, wobei deren Verbindung mit dem Profilfuß (6.1) auf seine beiden Enden beschränkt ist.

2. Rotor nach Anspruch 1, **dadurch gekennzeichnet**, daß die Breite (b) des Profilfußes (6.1) größer ist als die Höhe (h) des Profilsteges (6.2).

3. Rotor nach Anspruch 1, **dadurch gekennzeichnet**, daß die Strebe (6) aus mindestens zwei torsions- und biegeelastischen Platten (6') besteht, welche in Blattiefenrichtung zu einem bezüglich der Blattschlagebene symmetrischen V-Profil mit einem solchen Abstand seiner Profilschenkel an der der Blattwurzel (2.1) bzw. Rotornabe (11) zugeordneten Profilwurzel (6.3) zusammengesetzt sind, daß sich die Achsen der Profilschenkel in der Blattwinkel- bzw. Blattlängsachse (7) schneiden.

4. Rotor nach Anspruch 3, **dadurch gekennzeichnet**, daß die Platten (6') als Blattfedern aus faserverstärktem Kunststoff ausgebildet sind.

5. Rotor nach Anspruch 3 oder 4 , **dadurch gekennzeichnet**, daß die Platten (6') über an den drei Enden ihres T-Profils jeweils abgewinkelte Anschlußlaschen (6.4) zur Strebe (6) vereinigt sind.

6. Rotor nach Anspruch 5, **gekennzeichnet** durch eine Vereinigung der beiden jeweils zu paarenden Anschlußlaschen (6.4) mittels einer Verbindungslasche (6.5).

**Claims**

1. Rotor, in particular for a rotary-wing aircaft, in which the movability of the angle of incidence of each individual rotor blade relative to a rotor hub is ensured either by a torsionally elastic blade neck between a blade root and a blade wing or by a blade connection to a torsionally elastic rotor-hub arm, and in which the control of a blade angle of incidence is carried out by means of a control rod via a torsionally rigid blade-control sleeve, which extends free of contact in coaxial arrangement along the blade neck or rotor-hub arm respectively up to a blade wing or to a blade root respectively and which is supported at the blade root or the rotor hub by at least one web, **characterised in that** the web (6) has a T-profile, the profile web (6.2) of which is associated with the blade-control sleeve (5) and the profile foot (6.1) of which extends in the longitudinal direction of the blade-control sleeve (5) and is torsionally elastic and associated with the blade root (2.1) or rotor hub (11) respectively, in which respect their connection to the profile foot (6.1) is restricted to its two ends.

2. Rotor according to claim 1, **characterised in that** the width (b) of the profile foot (6.1) is greater than the height (h) of the profile web (6.2).

3. Rotor according to claim 1, **characterised in that** the web (6) is composed of at least two torsional and flexible plates (6'), which are assembled in the direction of the depth of a blade to form a symmetrical V-profile relative to the blade-beat plane at such distance of its profile shanks from the profile root (6.3), which is associated with the blade root (2.1) or the rotor hub (11) respectively, that the axes of the profile shanks intersect in the blade-angle or longitudinal axis of a blade (7).

4. Rotor according to claim 3, **characterised in that** the plates (6') are arranged to be leaf springs of fibre-reinforced plastic material.

5. Rotor according to claim 3 or 4, **characterised in that** the plates (6') are interconnected via connecting butts (6.4) which are respectively angled relative to the three ends of their T-profile.

6. Rotor according to claim 5, **characterised by** interconnection of two connecting butts (6.4) to be paired by means of a connecting butt (6.5).

**Revendications**

1. Rotor, notamment pour un giravion, dans lequel la mobilité angulaire de chaque pale de rotor par rapport à un moyeu de rotor est assurée soit par un collet de pale élastique en torsion disposé entre le pied de pale et la pale à proprement parler, soit par une fixation de la pale sur un bras élastique en torsion du moyeu de rotor et dans lequel l'angle de pale est réglé à l'aide d'une biellette de commande par l'intermédiaire d'un fourreau de commande de pale rigide en torsion qui est coaxial au collet de pale ou au bras du moyeu de rotor et s'étend librement le long de celui-ci jusqu'à la paie à proprement parler ou jusqu'au pied de pale, lequel fourreau est supporté côté pied de pale ou côté moyeu de rotor par au moins une entretoise, caractérisé par le fait que l'entretoise (6) comporte un profilé en T, dont l'aile (6.2) est associée au fourreau (5) de commande de pale et dont le pied (6.1) s'étend dans la direction longitudinale du fourreau (5) de commande de pale, est élastique en torsion et est associé au pied (2.1) de pale ou au moyeu (11) de rotor, la liaison de celui-ci avec le pied du profilé (6.1) étant limitée à ses deux extrémités.

2. Rotor selon la revendication 1, caractérisé par le fait que la largeur (b) du pied (6.1) du profilé est supérieure à la hauteur (h) de l'aile (6.2) du profilé.

3. Rotor selon la revendication 1, caractérisé par le fait que l'entretoise (6) est constituée par au moins deux plaques (6') élastiques en torsion et en flexion qui se raccordent dans la direction de la profondeur de la paie pour former un profilé en V symétrique par rapport au plan de battement avec une distance de l'aile de profilé par rapport au pied de profilé (6.3) associé au pied de pale (2.1) ou au moyeu de rotor (11) telle que les axes des ailes de profilé se coupent sur la bissectrice de l'angle de la pale ou sur l'axe longitudinal (7) de la pale.

4. Rotor selon la revendication 3, caractérisé par le fait que les plaques (6') se présentent sous la forme de ressorts à lames en matière plastique renforcée par fibres.

5. Rotor selon la revendication 3 ou 4, caractérisé par le fait que les plaques (6') sont reliées au moyen de pattes de fixation (6.4) pliées situées aux trois extrémités du profilé en T pour former l'entretoise (6).

6. Rotor selon la revendication 5, caractérisé par une liaison de deux pattes (6.4) de fixation appairées au moyen d'une patte de liaison (6.5).

FIG. 1

FIG. 2

FIG. 3

FIG. 4